(19) **Europäisches Patentamt / European Patent Office / Office européen des brevets**

(11) **EP 2 723 938 B1**

(12) **EUROPEAN PATENT SPECIFICATION**

(45) Date of publication and mention of the grant of the patent:
**19.02.2020 Bulletin 2020/08**

(21) Application number: **12728600.3**

(22) Date of filing: **21.06.2012**

(51) Int Cl.:
*D07B 1/04* *(2006.01)*     *D07B 1/02* *(2006.01)*
*B66C 1/18* *(2006.01)*

(86) International application number:
**PCT/EP2012/061964**

(87) International publication number:
**WO 2012/175610 (27.12.2012 Gazette 2012/52)**

(54) **PARALLEL UHMWPE ROPE**

PARALLELES UHMWPE SEIL

CORDE PARALLÈLE D'UNE MATIÈRE ARTIFICIELLE UHMWPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2011 EP 11171251**

(43) Date of publication of application:
**30.04.2014 Bulletin 2014/18**

(73) Proprietor: **Teijin Aramid B.V.**
**6824 BM Arnhem (NL)**

(72) Inventors:
• **VAN BERKEL, Bertil, Nicolaas, Joseph, Marie**
**NL-6851 GC Huissen (NL)**

• **VAN LEEUWEN, Mattheus, Bertus**
**NL-7322 GL Apeldoorn (NL)**
• **BOVENSCHEN, Soon, Joo**
**NL-6812 DJ Arnhem (NL)**

(74) Representative: **Heimann, Anette**
**CPW GmbH**
**Kasinostrasse 19-21**
**42103 Wuppertal (DE)**

(56) References cited:
**EP-A1- 2 014 445**     **EP-A2- 0 247 869**
**US-A- 5 771 673**     **US-A1- 2010 101 833**
**US-A1- 2011 059 325**

**Description**

Ropes based on synthetic polymer fibers are well known in the art. In general, two types of ropes may de distinguished.

In a first type, a bundle of polymer fibers is twisted to form a yarn with typical helix angles of more than 2°, twisted further together with other yarns into a strand again with typical helix angles of more than 2°, and the strand is combined with other strands through a process comprising one or more of braiding, laying, stranding with a helix angle of more than 2° or parallel laying of the strands with helix angles of 2° or less, to form a rope. This type of rope is often indicated as a braided, laid or parallel strand rope, and may be used as a strand in the making bigger rope. This type of rope is characterized by the presence of twisted strands of polymer fibers with helix angles of more than 2°.

In a second type, bundles of polymer fibers are laid in parallel with helix angles of 2° or less, and the parallel fibers are combined together, e.g., using a sleeve, wrap, or extruded polymer cover, to form a rope comprising polymer fibers the length axis of which is parallel to the length of the rope or with helix angles smaller than 2°. This type of rope is often indicated as a parallel rope or UD-cable. It is characterized by the presence of a body of parallel polymer fibers with helix angles smaller than 2°.

Although braided, laid, and parallel strand rope make up a large part of the rope market, parallel ropes have a specific field of application, int. al., in applications where stiffness is important.

In the art, parallel ropes are known based on, int. al., aramid fibers, poly(p-phenylene-2,6-benzobisoxazole) fibers, and gelspun polyethylene fibers.

EP 0 247 869 describes a load -handling band made up of numerous reinforicing plastic films of the same width as the band, the films being laminated one on top of the other whereby they remain parallel during the handling of the load. While these ropes have good properties, there is still need for improved parallel ropes.

In particular, there is need for a parallel rope which combines a high modulus with a low weight and a long life-span. For environmental reasons it would be desirable if such a rope could comprise a low content of non-polymer components. The present invention provides such a rope.

The present invention pertains to a rope comprising elongate bodies wherein the length axis of the elongate bodies is parallel to the length of the rope or wherein the elongate bodies show helix angles smaller than 2°, characterized in that the elongate bodies comprise at least 25 and at most two million tapes of ultra-high molecular weight polyethylene, the tapes having a width to thickness ratio of at least 10, a polymer solvent content below 0.05 wt.%, and a width of at least 0.5 mm and at most 2 mm, wherein the rope has a diameter of 3 to 500 mm, and wherein the tapes are bonded together by sheathing the rope in a sheath material, impregnating the rope with polymer, winding the rope with bonding yarn, or combinations thereof, the bonding of the tapes not involving fusing the tapes together.

The rope of the present invention combines a very high modulus with a low weight and a long life, caused in particular by a high hydrolytic stability. Further advantageous properties and specific embodiments will become apparent from the further description.

The present invention pertains to a method of manufacturing a rope according to claim 7, too.

The rope

The rope according to the invention generally has a modulus of at least 100 N/tex, in particular at least 120 N/tex, more in particular at least 140 N/tex, at least 180 N/tex, or even at least 200 N/tex. The modulus is determined in accordance with Cordage Institute International Standard CI1500.

The high modulus of the rope according to the invention makes it particularly suitable for use in applications where the rope is used under tension, e.g., in rigging, in lifting slings, and in guy lines.

In another embodiment, the rope according to the invention has a modulus of at least 100 GPa, in particular at least 120 GPa, more in particular at least 140 GPa, at least 180 GPa, or even at least 200 GPa.

The rope according to the invention generally has a tensile strength of at least 1.2 GPa, in particular at least 1.5 GPa, more in particular at least 1.8 GPa, even more in particular at least 2.0 GPa, still more in particular at least 2.5 GPa, more in particular at least 3.0 GPa, still more in particular at least 4.0 GPa. Tensile strength is determined in accordance with Cordage Institute International Standard CI1500.

The rope according to the invention generally has a minimum breaking load (MBL) of at least 0.5 tonnes, more in particular at least 1 tonnes. As a maximum value, a value of 20.000 tonnes may be mentioned. Depending on the application, in one embodiment the rope may have a breaking load in the range of 0.5-50 tonnes. In another embodiment, the breaking load may be much higher, e.g., in the range of 50-20.000 tonnes.

The rope according to the invention generally has a creep rate, determined at 20°C under sustained load of 1 N/tex, that is lower than $1*10^{-4}$ %/s, more in particular lower than $1*10^{-5}$ %/s or even more particular, lower than $1*10^{-6}$ %/s.

The rope according to the invention generally has an EA stiffness (Force at 100% elongation) of at least 0.1 MN. As a maximum value a value of 25.000 MN may be mentioned. The EA stiffness is the modulus in N/dtex multiplied by the linear density in dtex. It is a measure of the modulus of a particular product, and is dependent on the linear density of the product. The rope according to the invention has a relatively long lifespan, especially as compared to ropes based on PBO. This is evidenced by a high hydrolytic stability. For example, in a stability test involving storage of the rope for 3 months at 80ºC and 95% humidity, the rope according to the invention shows a residual strength retention of at least 80%, in particular at least 90%, more in particular at least 95%, still more in particular at least 98%.

The diameter of the rope may vary depending on the intended use of the rope. The rope will have a diameter of at least 3 mm. The rope diameter will not be above 500, e.g. 3-50 mm, in particular 5-25 mm. In another embodiment the rope has a diameter in the range of 26-500 mm, in particular 26-300 mm. In one embodiment, the rope has a diameter in the range of mm, more in particular 40-250 mm.

The density of the rope as described herein generally is of at most 1 g/cm$^3$. An advantage of having this relatively low density is that the ropes combine a light weight with a high strength and modulus.

The linear density of the rope (also known as rope weight and expressed in, e.g., weight units per metre) may generally be of at least 0.5 g/m, in particular at least 5 g/m, more in particular at least 15 g/m, and even more in particular at least 50 g/m. The linear density of the rope maybe, for instance, at most 150000 g/m, but generally the linear density is at most 5000 g/m, in particular at most 1500 g/m, more in particular at most 500 g/m, and even more in particular at most 100 g/m. The number of tapes in the rope will depend on the weight per metre of the tapes and on the weight per metre of the final rope.

To be a parallel rope, the rope contains at least 25 tapes, more in particular at least 50 tapes. The maximum number of the tapes is not critical. Generally, the rope may contains at most 5000 tapes, in particular at most 1000 tapes, and more in particular at most 500 tapes. The number of tapes will depend on the dimensions of the tapes and the dimensions of the rope obtained therefrom. Nevertheless, using small tapes (tapes with a width of at most 2 mm) the rope contains at most 2 million tapes, in particular at most 500000 tapes, more in particular at most 10000 tapes.

It is a particular advantage of the rope according to the invention that it can be relatively free from non-polymer components. As is known in the art, fibers and filaments are essentially always treated with a surface compound, in particular to improve the electrostatic and processing properties of the fibers. More specifically, if fibers are not provided with this so-called finish individual fibers in a bundle will repulse each other through electrostatic interaction, resulting in expansion of the bundle (a phenomenon called ballooning). However, the presence of finishing components may be disadvantageous, e.g., from an environmental point of view. In particular, the possibility of leaching of hydrophilic finish compounds from a rope in an aqueous environment is not desired. It has been found that the tapes as used in the present rope do not require the presence of finish compounds, and therefore they make it possible to prepare a rope not suffering from leaching of this type of component. An additional advantage in this respect is that the tapes used in the rope according to the invention are free from polymer solvent, due to their manufacturing method, as will be described in more detail below. More in particular, the tapes

have a polymer solvent content of less than 0.05 wt.%, in particular less than 0.025 wt.%, more in particular less than 0.01 wt.%. In this, the material may be distinguished from solvent-derived polymer fibers, which show a higher solvent content, and which also do not meet various other requirements of the present invention, int. al., the ratio between width and thickness.

Thus, due to the use of the present tapes, if so desired, the rope according to the invention may have a content of non-polyethylene low-molecular weight components which is below 1 wt.%, in particular below 0.5 wt.%, more in particular below 0.25 wt.%, even more in particular below 0.1 wt.%.

While the presence of a finish to improve the electrostatic and processing properties of the tape is not required, as indicated above, it is possible, if so desired, to provide a finish to the tape to provide the rope with specific properties.

The rope according to the invention comprises parallel or substantially parallel elongate bodies which comprise tapes of ultra-high molecular weight polyethylene (UHMWPE), the tapes having a width to thickness ratio of at least 10.

In general, at least 10 wt.% of the parallel or substantially parallel elongate bodies will be UHMWPE tapes, in particular at least 40 wt.%, more in particular at least 60 wt.%, still more in particular at least 80 wt.%, even more in particular at least 90 wt.%, still more in particular at least 95 wt.%.

The rope may be manufactured in accordance with the methods known in the art for parallel ropes. The essence is that the tapes are aligned in parallel, and then bonded together to form a rope. It should be noted that the bonding does not involve fusing the tapes together in whole or in part, as this is believed to detrimentally affect the properties of the rope.

The parallel tapes in the rope may be bonded together in manners known in the art, e.g., by sheathing the rope in a sheath material, impregnating the rope with polymer, winding the rope with bonding yarn, or combinations thereof. The aligning the tapes in parallel can be carried out by methods known in the art. In one embodiment, the desired number of tapes is provided to a unit where they are aligned in parallel and bonded together. In another embodiment the tape is wound around two fixtures at either end of the desired rope length, and the thus formed set of parallel tapes are bonded together.

The rope according to the invention may be surrounded by a sleeve, wrap, tape bonding, or polymer cover. For the properties mentioned above, the sleeve, wrap, or any other cover should not be taken into account.

The rope according to the invention may be used in numerous applications.

In one embodiment a relatively light-weight rope is provided which is suitable for use for example as rigging in sailing boats. This rope will generally have a diameter of 1 up to 50 mm in combination with a modulus as specified earlier, a strength as specified earlier, a creep as specified earlier, and an EA stiffness of 0.1 to 250 MN.

In another embodiment a rope is provided which is particularly suitable for industrial applications like lifting and mooring. This rope will generally have a diameter of 50 to 500 mm in combination with a modulus as specified earlier, a strength as specified earlier, a creep as specified earlier, and an EA stiffness of 250 to 25000 MN.

The tapes

The polyethylene tapes used in the rope of the present invention has a width of at least 0.5 mm and of at most 2 mm.The tape width will depend on the thickness of the rope to be manufactured. If the diameter of the rope is relatively low, the tape should not be too wide.

The tapes generally gave a thickness of at most 200 microns, in particular at most 150 microns, more in particular at most 100 microns. Generally, the tape thickness is at least 5 microns, in particular at least 10 microns. A thickness range of 20 to 80 microns may be preferred.

The ratio between the width and the thickness of the tapes in the rope of the present invention is at least 10, preferably, at least 20. The ratio will also depend upon the tape width, which in turn will depend upon the desired rope diameter as indicated above. In one embodiment, the width to thickness ratio is in the range of 10-200, more in particular in the range of 30-100.

The linear density of the tapes used in the rope of the present invention may, e.g., be in the range of 500-25000 dtex. In one embodiment, it may be in the range of 800-2000 dtex. A value in this range may be attractive because it is of the same order as filament bundles which are conventionally used.

The tapes used in the present invention generally have a modulus, determined in accordance with ASTM D885, of at least 100 GPa, in particular at least 120 GPa, more in particular at least 140 GPa, or even at least 180 GPa.

It has been found that the ropes according to the invention show a high modulus retention, that is, not much modulus is lost when rope is manufactured from high-modulus tape in accordance with this invention. Not wishing to be bound by theory, it is believed that due to the low helix angles in the parallel ropes according to the invention, forces on the rope have only a small lateral component, and therefore only small constructional effect on modulus, breaking force, and elongation at break. Thus, it is believed that an advantage of the rope of the present invention is that it is associated with a substantial retention of the modulus of the tapes in the modulus of the final rope. In other words, when a tape with a relatively high modulus is used, a rope may be obtained which also has relatively high modulus. In one embodiment, the modulus of the rope is at least 80% of the modulus of the tape, in particular at least 90%, in some embodiments even at least 95%.

The tapes used in the rope according to the invention generally have a tensile strength of at least 1.2 GPa, in particular at least 1.5 GPa, more in particular at least 1.8 GPa, even more in particular at least 2.0 GPa, still more in particular at least 2.5 GPa, more in particular at least 3.0 GPa, still more in particular at least 4.0 GPa. Tensile strength is determined in accordance with ASTM D885. The higher the tensile strength of the tapes, the higher the tensile strength of the rope can be.

The tapes used in the rope according to the invention generally have a creep rate lower than $5*10^{-5}$ %/s, more in particular lower than $5*10^{-6}$ %/s or even more particular, lower than $1*10^{-6}$ %/s. The lower the creep rate, the higher the loading capacity of the rope can be. A rope generally shows a higher creep than the tape due to constructional compacting of the rope during loading.

As for the modulus, it has been found that the ropes according to the invention show a high strength retention, that is, not much strength is lost when rope is manufactured from high-strength tape in accordance with this invention. In one embodiment, the strength of the rope is at least 50% of the strength of the tape, in particular at least 60%, more in particular at least 75%, even more in particular at least 90%, in some embodiments even at least 95%.

In one embodiment, the tapes used in the rope according to the invention have a 200/110 uniplanar orientation parameter Φ of at least 3. The 200/110 uniplanar orientation parameter Φ is defined as the ratio between the 200 and the 110 peak areas in the X-ray diffraction (XRD) pattern of the tape sample as determined in reflection geometry. The 200/110 uniplanar orientation parameter gives information about the extent of orientation of the 200 and 110 crystal planes with respect to the tape surface. For a tape sample with a high 200/110 uniplanar orientation the 200 crystal planes are highly oriented parallel to the tape surface. It has been found that a high uniplanar orientation is generally accompanied by a high tensile strength and high tensile energy to break. It may be preferred for the 200/110 uniplanar orientation parameter Φ to be at least 4, more in particular at least 5, or at least 7. Higher values, such as values of at least 10 or even at least 15 may be particularly preferred. The theoretical maximum value for this parameter is infinite if the peak area 110 equals zero. High values for the 200/110 uniplanar orientation parameter are often accompanied by high values for the strength and the energy to break. The 200/110 uniplanar orientation parameter Φ may be determined as is described in WO2010/007062, page 9, line 19, through page 11, line 17.

The ultra-high molecular weight polyethylene used in the present invention has a weight average molecular weight (Mw) between $1*10^6$ gram/mole and $1*10^8$ gram/mol. In one embodiment, the polyethylene has a number average molecular weight (Mn) of at least $2.0*10^5$ g/mol. The Mn may be at least $5.0*10^5$ g/mol, more in particular at least $8.0*10^5$ g/mol, or even at least 1.0 million g/mol, or even at least 1.2 million gram/mol. The use of a polymer with a relatively high Mw has the advantage of a relatively high strength; the use of the polymer with a relatively high Mn has the advantage that it contains a relatively low amount of low-molecular weight polyethylene, and as it is believed that the properties of the tape derived from the high molecular weight molecules the presence of fewer low-molecular weight molecules will lead to a tape with better properties. The use of a polymer with a relatively high Mw in combination with a relatively high Mn may be particularly preferred.

The Mn and Mw may be determined as is described in WO2010/079172. Reference may also be made to S. Talebi et al. in Macromolecules 2010, Vol. 43, pages 2780-2788. In particular, the Mn and Mw may be determined in accordance with ASTM D 6474-99 at a temperature of 160 °C using 1, 2, 4-trichlorobenzene (TCB) as solvent. Appropriate chromatographic equipment (PL-GPC220 from Polymer Laboratories) including a high temperature sample preparation device (PL- SP260) may be used. The system is calibrated using sixteen polystyrene standards (Mw/Mn <1.1) in the molecular weight range $5 \times 10^3$ to $8 \times 10^6$ g/mole.

In one embodiment, the tapes are based on disentangled PE, e.g., as described in WO 2009/007045, and WO2010/079172.

In one embodiment, the UHMWPE has a strain hardening slope of below 0.10 N/mm at 135°C. Preferably, it also has a strain hardening slope of below 0.12 N/mm at 125°C. The strain hardening slope is determined by subjecting compressed polymer to a drawing step under specific conditions.

The test is carried out as follows: polymer powder is subjected to compaction at a pressure of 200 bar, at 130°C, for 30 minutes to form tensile bars with a thickness of 1 mm, a width of 5 mm and a length of 15 mm. The bars are subjected to drawing at a tensile speed of 100 mm/min at a temperature of 125°C or 135°C. The drawing temperature is chosen such that no melting of the polymer occurs, as can be checked by DSC in simple heating mode. The bar is drawn from 10 mm to 400 mm. For the tensile test a force cell of 100N is used. The force cell measures force required for the elongation of the sample at the fixed temperature. The force/elongation curve shows a first maximum, which is also known as the yield point. The strain hardening slope is defined as the steepest positive slope in the force/elongation curve after the yield point.

In one embodiment of the present invention, the polymer has a strain hardening slope, determined at 135 °C, of below 0.10 N/mm, in particular below 0.06 N/mm, more in particular below 0.03 N/mm. In another embodiment, the polymer has a strain hardening slope, determined at 125 °C, of below 0.12 N/mm, in particular below 0.08 N/mm, more in particular below 0.03 N/mm. In a preferred embodiment, the polymer meets the stipulated requirements both at 125 °C and at 135 °C. A low strain hardening slope means that the material has high drawability at low stress. While not wishing to be bound by theory, it is believed that this means in turn that the polymer chains in the solid states contain few entanglements, and that this will enable the manufacture of tapes with good properties In other words, a strain hardening slope within this range means that there is little entanglement between the polymer chains. In the present specification, a polyethylene with a strain hardening slope as specified above will therefore also be indicated as a disentangled polyethylene. In one embodiment of the present invention, a polyethylene is selected which can be compressed below its equilibrium melting temperature of 142°C, more in particular within the temperature range of 100-138°C, wherein the thus-obtained film can be drawn below the equilibrium meting temperature by more than 15 times its initial length.

It is preferred for the polyethylene used in the rope according to the invention to have an elastic shear modulus $G_N^0$ determined directly after melting at 160°C of at most 1.4 MPa, in particular 1.0 MPa, more in particular at most 0.9 MPa, still more in particular at most 0.8 MPa, more in particular at most 0.7 MPa. The wording "directly after melting" means that the elastic shear modulus is determined as soon as the polymer has melted, in particular within 15 seconds after the polymer has melted. For this polymer melt $G_N^0$ typically increases from 0.6 to 2.0 MPa in one, two, or more hours, depending on the molar mass of the polymer. $G_N^0$ is the elastic shear modulus in the rubbery plateau region. It is related to the average molecular weight between entanglements Me, which in turn is inversely proportional to the entanglement density. In a thermodynamically stable melt having a homogeneous distribution of entanglements, Me can be calculated from $G_N^0$ via the formula $G_N^0 = g_N \rho RT / M_e$ , where $g_N$ is a numerical factor set at 1, $\rho$ is the density in g/cm3, R is the gas constant and T is the absolute temperature in K. A low elastic shear modulus directly after melting stands for long stretches of polymer between entanglements, and thus for a low degree of entanglement. The adopted method for the investigation on changes in $G_N^0$ with the entanglements formation is the same as described in publications (Rastogi, S., Lippits, D., Peters, G., Graf, R., Yefeng, Y. and Spiess, H., "Heterogeneity in Polymer Melts from Melting of Polymer Crystals", Nature Materials, 4(8), 1st August 2005, 635-641 and PhD thesis Lippits, D.R., "Controlling the melting kinetics of polymers; a route to a new melt state", Eindhoven University of Technology, dated 6th March 2007, ISBN 978-90-386-0895-2).

In one embodiment the disentangled UHMWPE has a DSC crystallinity of at least 74%, more in particular at least 80%. In one embodiment, the UHMWPE has a DSC crystallinity of at least 85%, more in particular at least 90%. DSC crystallinity may be determined as described in WO2010/007062, paragraph bridging pages 13 and 14.

In one embodiment, the disentangled UHMWPE has a bulk density which is significantly lower than the bulk density of conventional UWMWPEs. More in particular, the UHMWPE manufactured using the catalyst system of the present invention may have a packing density below 0.25 g/cm$^3$, in particular below 0.18 g/cm$^3$, still more in particular below 0.13 g/cm$^3$. The packing density may be determined in accordance with ASTM-D1895. A fair approximation of this value can be obtained as follows. A sample of UHMWPE powder as synthesised is poured into a measuring beaker of exact 100 ml. After scraping away the surplus of material, the weight of the content of the beaker is determined and the packing density is calculated. The polymer is provided in particulate form, for example in the form of a powder, or in any other suitable particulate form. Suitable particles have a particle size of up to 5000 micron, preferably up to 2000 micron, more in particular up to 1000 micron. The particles preferably have a particle size of at least 1 micron, more in particular at least 10 micron. The particle size may be determined as specified on page 15, lines 6-12 of WO2010/079172.

The polyethylene can be a homopolymer of ethylene or a copolymer of ethylene with a co-monomer which is another alpha-olefin or a cyclic olefin both with generally between 3 and 20 carbon atoms. Examples include propene, 1-butene, 1-pentene, 1-hexene, 1-heptene, 1-octene, cyclohexene, etc. The use of dienes with up to 20 carbon atoms is also possible, e.g., butadiene or 1-4 hexadiene. The amount of (non-ethylene) alpha-olefin in the ethylene homopolymer or copolymer used in the process according to the invention preferably is at most 10 mole%, preferably at most 5 mole%, more preferably at most 1 mole%. If a (non-ethylene) alpha-olefin is used, it is generally present in an amount of at least 0.001 mole%, in particular at least 0.01 mole%, still more in particular at least 0.1 mole%.

Disentangled UHMWPE may be manufactured via processes known in the art, e.g., as described in WO2010/139720.

Tape manufacture

The tapes used in the ropes according to the invention may be manufactured through a solid state film manufacturing process comprising the steps of subjecting a starting ultra-high molecular weight polyethylene to a compacting step and a stretching step under such conditions that at no point during the processing of the polymer its temperature is raised to a value above its melting point.

The compacting step is carried out to integrate the polymer particles into a single object, e.g., in the form of a mother sheet. The stretching step is carried out to provide orientation to the polymer and manufacture the final product. The two steps are carried out at a direction perpendicular to each other. These elements may be combined in a single step, or carried out in different steps, each step performing one or more of the compacting and stretching elements. For example, in one embodiment of the process according to the invention, the process comprises the steps of compacting the polymer powder to form a mothersheet, rolling the plate to form rolled mothersheet and subjecting the rolled mothersheet to a stretching step to form a polymer film.

Where appropriate, broader tapes may be slit or split into narrower tapes at any point in time during the processing step, more in particular after stretching, between intermediate stretching steps, and before stretching. The slitting or splitting may be carried out by means known in the art, e.g., using knives, or as described in WO 2010/003971 by subjecting a tape to a force in the direction of the thickness of the tape over the whole width of the tape.

Where the polyethylene is disentangled polyethylene, the solid state processing thereof may be carried out as is described in WO 2009/007045 or WO2010/079172. Accordingly, the process may comprise subjecting a starting disentangled UHMWPE to a compacting step and a stretching step under such conditions that at no point during the processing of the polymer its temperature is raised to a value above its melting point.

The present invention is illustrated by the following example without being limited thereto or thereby.

Examples

A set of three UHMWPE tapes with a MW of 4.9-15.5 million, a polymer solvent content below 0.05 wt.% and a width of 2 mm and a thickness of 50 micron (i.e. width to thickness ratio of 40), were aligned with the length axis of tapes being parallel to each other (example 1).

The breaking force, the elongation at break and the modulus of the parallel construction were measured according the ASTM D-885-98 standard test method for determining the tensile properties of yarns and cords. Tapes were placed on an INSTRON tensile tester and were pulled until breakage at a speed corresponding to 50% of the length of the sample per minute. The breaking force, the elongation at break and the modulus were determined from this experiment as also described in the ASTM D 7269 method.

The results obtained are presented in table 1.

**Table 1**

|  | Construction | Breaking force | Elongation at break | Modulus (GPa) |
|---|---|---|---|---|
| Ex. 1 | Parallel tapes | 670 N | 1.9% | 165 |

As can be seen from table 1 the construction of parallel tapes (example 1) displays excellent properties in particular a high breaking force, a low elongation at break and a high modulus.

**Claims**

1. Rope comprising elongate bodies wherein the length axis of the elongate bodies is parallel to the length of the rope or wherein the elongate bodies show helix angles smaller than 2°, **characterized in that** the elongate bodies comprise at least 25 and at most two million tapes of ultra-high molecular weight polyethylene, the tapes having a width to thickness ratio of at least 10, a polymer solvent content below 0.05 wt.%, and a width of at least 0.5 mm and at most 2 mm, wherein the rope has a diameter of 3 to 500 mm, and wherein the tapes are bonded together by sheathing the rope in a sheath material, impregnating the rope with polymer, winding the rope with bonding yarn, or combinations thereof, the bonding of the tapes not involving fusing the tapes together.

2. Rope according to claim 1 wherein the rope has a modulus of at least 100 N/tex, in particular at least 120 N/tex, more in particular at least 140 N/tex, at least 180 N/tex, or even at least 200 N/tex.

3. Rope according to any one of the preceding claims wherein the rope has a tensile strength of at least 1.2 GPa, in particular at least 1.5 GPa, more in particular at least 1.8 GPa, even more in particular at least 2.0 GPa, still more in particular at least 2.5 GPa, more in particular at least 3.0 GPa, still more in particular at least 4.0 GPa.

4. Rope according to any one of the preceding claims wherein the rope has a minimum breaking load of at least 0.5 tonnes.

5. Rope according to any one of the preceding claims wherein the rope has an EA stiffness of at least 0.5 MN, determined by multiplying the modulus of the rope in N/dtex by the linear density of the rope in dtex.

6. Rope according to any one of the preceding claims wherein the rope has a creep rate determined at 20°C under sustained load of 1 N/tex, that is lower than $1*10^{-4}$ %/s.

7. Method for manufacturing a rope according to any one of the preceding claims, comprising the steps of

   - aligning at least 25 and at most two million tapes of ultra-high molecular weight polyethylene having a polymer solvent content below 0.05 wt.% in parallel, wherein the length axis of the tapes is parallel to the length of the rope or wherein the tapes show helix angles smaller than 2°, said tapes having a width of at least 0.5 mm and at most 2 mm and a width to thickness ratio of at least 10, and,
   - bonding together the tapes by sheathing the rope in a sheath material, impregnating the rope with polymer, winding the rope with bonding yarn, or combinations thereof, the bonding of the tapes not involving fusing the tapes together, wherein the rope has a diameter of 3 to 500 mm.

**Patentansprüche**

1. Seil, das längliche Körper umfasst, wobei die Längsachse der länglichen Körper parallel zur Länge des Seils ist oder wobei die länglichen Körper Schrägungswinkel kleiner als 2° zeigen, **dadurch gekennzeichnet, dass** die länglichen Körper mindestens 25 und höchstens zwei Millionen Bänder aus ultrahochmolekularem Polyethylen umfassen, wobei die Bänder ein Breiten-/Dickenverhältnis von mindestens 10 und einen Polymerlösungsmittelgehalt unter 0,05 Gew.-% und eine Breite von mindestens 0,5 mm und höchstens 2 mm aufweisen, wobei das Seil einen Durchmesser von 3 bis 500 mm aufweist, und wobei die Bänder durch Ummanteln des Seils mit einem Mantelmaterial, Imprägnieren des Seils mit Polymer, Wickeln des Seils mit Verbindungsgarn oder Kombinationen davon miteinander verbunden sind, wobei das Verbinden der Bänder nicht das Verschmelzen der Bänder miteinander zur Folge hat.

2. Seil nach Anspruch 1, wobei das Seil einen Modul von mindestens 100 N/tex, insbesondere mindestens 120 N/tex, spezieller mindestens 140 N/tex, mindestens 180 N/tex oder sogar mindestens 200 N/tex aufweist.

3. Seil nach einem der vorstehenden Ansprüche, wobei das Seil eine Zugfestigkeit von mindestens 1,2 GPa, insbesondere mindestens 1,5 GPa, spezieller mindestens 1,8 GPa, noch spezieller mindestens 2,0 GPa, immer noch spezieller mindestens 2,5 GPa, spezieller mindestens 3,0 GPa, immer noch spezieller mindestens 4,0 GPa aufweist.

4. Seil nach einem der vorstehenden Ansprüche, wobei das Seil eine Mindestbruchlast von mindestens 0,5 Tonnen aufweist.

5. Seil nach einem der vorstehenden Ansprüche, wobei das Seil eine EA-Steifigkeit von mindestens 0,5 MN aufweist, bestimmt durch Multiplikation des Moduls des Seils in N/dtex mit der linearen Dichte des Seils in dtex.

6. Seil nach einem der vorstehenden Ansprüche, wobei das Seil eine Kriechrate aufweist, die bei 20 °C unter Dauerbelastung von 1 N/tex bestimmt wird, die kleiner als $1^{*}10^{-4}$ %/s ist.

7. Verfahren zur Herstellung eines Seils nach einem der vorstehenden Ansprüche, umfassend die Schritte

- des Ausrichtens von mindestens 25 und höchstens zwei Millionen Bändern aus ultrahochmolekularem Polyethylen mit einem Polymerlösungsmittelgehalt unter 0,05 Gew.-% in paralleler Weise, wobei die Längsachse der Bänder parallel zur Länge des Seils ist oder wobei die Bänder Schrägungswinkel kleiner als 2° zeigen, wobei die Bänder eine Breite von mindestens 0,5 mm und höchstens 2 mm und ein Breiten-/Dickenverhältnis von mindestens 10 aufweisen, und
- des Verbindens der Bänder miteinander durch Ummanteln des Seils mit einem Mantelmaterial, Imprägnieren des Seils mit Polymer, Wickeln des Seils mit Verbindungsgarn oder Kombinationen davon, wobei das Verbinden der Bänder nicht das Verschmelzen der Bänder miteinander zur Folge hat, wobei das Seil einen Durchmesser von 3 bis 500 mm aufweist.

## Revendications

1. Corde comprenant des corps allongés dans laquelle l'axe longitudinal des corps allongés est parallèle à la longueur de la corde ou dans laquelle les corps allongés présentent des angles d'hélice inférieurs à 2°, **caractérisée en ce que** les corps allongés comprennent au moins 25 et au plus deux millions de rubans de polyéthylène de masse moléculaire ultra-élevée, les rubans ayant un rapport de la largeur à l'épaisseur d'au moins 10, une teneur en solvant de polymère inférieure à 0,05 % en poids, et une largeur d'au moins 0,5 mm et d'au plus 2 mm, dans laquelle la corde a un diamètre de 3 à 500 mm, et dans laquelle les rubans sont liés les uns aux autres par enveloppement de la corde dans un matériau formant enveloppe, imprégnation de la corde avec un polymère, enroulement de la corde avec un fil de liaison, ou des combinaisons de ceux-ci, la liaison des rubans ne comprenant pas la fusion des rubans les uns avec les autres.

2. Corde selon la revendication 1 dans laquelle la corde a un module d'au moins 100 N/tex, en particulier d'au moins 120 N/tex, plus particulièrement d'au moins 140 N/tex, d'au moins 180 N/tex, ou même d'au moins 200 N/tex.

3. Corde selon l'une quelconque des revendications précédentes dans laquelle la corde a une force sous traction d'au moins 1,2 GPa, en particulier d'au moins 1,5 GPa, plus particulièrement d'au moins 1,8 GPa, encore plus particulièrement d'au moins 2,0 GPa, encore plus particulièrement d'au moins 2,5 GPa, plus particulièrement d'au moins 3,0 GPa, encore plus particulièrement d'au moins 4,0 GPa.

4. Corde selon l'une quelconque des revendications précédentes dans laquelle la corde a une charge de rupture minimale d'au moins 0,5 tonne.

**5.** Corde selon l'une quelconque des revendications précédentes dans laquelle la corde a une raideur EA d'au moins 0,5 MN, déterminée en multipliant le module de la corde en N/dtex par la masse linéique de la corde en dtex.

**6.** Corde selon l'une quelconque des revendications précédentes dans laquelle la corde a une vitesse de fluage déterminée à 20 °C sous une charge soutenue de 1 N/tex, qui est inférieure à $1*10^{-4}$ %/s.

**7.** Procédé de fabrication d'une corde selon l'une quelconque des revendications précédentes, comprenant les étapes de

- alignement d'au moins 25 et d'au plus deux millions de rubans de polyéthylène de masse moléculaire ultra-élevée ayant une teneur en solvant de polymère inférieure à 0,05 % en poids en parallèle, dans lequel l'axe longitudinal des rubans est parallèle à la longueur de la corde ou dans lequel les rubans présentent des angles d'hélice inférieurs à 2°, lesdits rubans ayant une largeur d'au moins 0,5 mm et d'au plus 2 mm et un rapport de la largeur à l'épaisseur d'au moins 10, et,
- liaison des rubans les uns aux autres par enveloppement de la corde dans un matériau formant enveloppe, imprégnation de la corde avec un polymère, enroulement de la corde avec un fil de liaison, ou des combinaisons de ceux-ci, la liaison des rubans ne comprenant pas la fusion des rubans les uns avec les autres, dans lequel la corde a un diamètre de 3 à 500 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0247869 A
- WO 2010007062 A
- WO 2010079172 A
- WO 2009007045 A
- WO 2010139720 A
- WO 2010003971 A

**Non-patent literature cited in the description**

- **S. TALEBI et al.** *Macromolecules,* 2010, vol. 43, 2780-2788
- **RASTOGI, S. ; LIPPITS, D. ; PETERS, G. ; GRAF, R. ; YEFENG, Y. ; SPIESS, H.** Heterogeneity in Polymer Melts from Melting of Polymer Crystals. *Nature Materials,* 01 August 2005, vol. 4 (8), 635-641
- Controlling the melting kinetics of polymers; a route to a new melt state. PhD thesis Lippits, D.R. Eindhoven University of Technology, 06 March 2007